# EUROPÄISCHE PATENTSCHRIFT

(11) **EP 1 359 486 B1**
(45) Veröffentlichungstag und Bekanntmachung des Hinweises auf die Patenterteilung: **27.07.2005**
(21) Anmeldenummer: 03008422.2
(22) Anmeldetag: 11.04.2003
(51) Int. Cl.: G05D 1/02, B60Q 1/00

(54) **Informationssystem und Verfahren zur Informationsausgabe über ein Lenkrad**
Information system and method for outputting information by means of a steering wheel
Système et procédé de sortie d'information par l'intermédiaire d'un volant de direction

(30) Priorität: 04.05.2002 DE 10220102
(43) Veröffentlichungstag der Anmeldung: 05.11.2003
(73) Patentinhaber: AUDI AG, 85045 Ingolstadt (DE)
(72) Erfinder: Vukotich, Alejandro, 85049 Ingolstadt (DE); Popken, Markus, 85139 Wettstetten (DE); Buschardt, Boris, 85049 Ingolstadt (DE)
(74) Vertreter: Thielmann, Frank

(56) Entgegenhaltungen:
- EP-A- 0 856 432
- DE-A- 3 822 193
- US-A- 5 767 796

## Beschreibung

Die vorliegende Erfindung betrifft ein Informationssystem und ein Verfahren zur Informationsausgabe über ein Lenkrad.

In Fahrzeugen werden heutzutage eine Reihe von Fahrerassistenzsystemen implementiert, die dem Fahrer bei der Führung seines Fahrzeugs helfen sollen. Zur Warnung eines Fahrers werden dabei in der Regel akustische oder visuelle Signale eingesetzt. Der Nachteil solcher Warnsysteme ist, dass der Sehsinn und Hörsinn des Fahrers bereits durch andere Signale, die auf diese Weise übertragen werden, ausreichend belastet ist. Außer dem Beobachten der Umgebung des Fahrzeugs und den anderen Verkehrsteilnehmern ist der visuelle Aufnahmekanal des Fahrers nämlich beispielsweise durch die Geschwindigkeitsanzeige belastet. Der akustische Aufnahmekanal ist zum einen durch Geräusche aus der Umgebung, wie beispielsweise Sirenen von Einsatzwagen oder dem Motorengeräusch, belastet. Die Übermittlung weiterer Informationen über den visuellen oder akustischen Kanal kann daher zu Sicherheitsrisiken führen. Darüber hinaus werden akustische Signale von Beifahrern in der Regel als unangenehm empfunden.

Um diesen Problemen zu begegnen wurden bereits Ansätze gemacht, den Tastsinn des Fahrers als Kanal zur Übermittlung von Warnungen zu verwenden. Aus der DE 197 02 383 A1 ist ein Fahrzeuglenk-Steuer-/Regelsystem bekannt, bei dem zur Warnung des Fahrers ein Vibrations-Drehmoment an das Lenkrad angelegt werden kann. In der US 5,767,796 ist weiterhin ein Navigationssystem beschrieben, bei dem Bewegungselemente verwendet werden können, durch die ein Rotationspuls auf ein Lenkrad aufgebracht werden kann, um dem Fahrer eine Richtung, beispielsweise zum Abbiegen, vorzugeben. Weiterhin ist in der DE 38 22 193 ein Verfahren zur haptischen Anzeige einer Abstandwarnung beschrieben, bei dem eine Abstandwarnung zu einem Hindernis durch Erschütterung des Lenkrads über die Lenksäule, des Fahrersitzes oder der gesamten Fahrgastzelle erfolgt.

Der Nachteil dieser Systeme des Stands der Technik besteht darin, dass mit diesen Systemen ausschließlich Warnungen an den Fahrer übermittelt werden können.

In der EP 0 856 432 A2 wird eine Innenanzeige für ein Fahrzeug beschrieben, bei dem nicht das gesamte Lenkrad bewegt wird, wenn Informationen an den Fahrer gegeben werden sollen. Hierzu sind in dem Lenkrad ein oder mehrere Vibrationselemente vorgesehen, die so angeordnet sind, dass der Fahrer das Lenkrad in dem Bereich der Vibrationselemente berührt. Weiterhin ist in der oben genannten US 5,767,796 als eine Ausführungsform eines Navigationssystems die Anordnung von Vibrationselementen an einem Lenkrad beschrieben. Die Vibrationselemente sind auf der linken und der rechten Seite des Lenkrades vorgesehen und werden in Abhängigkeit der anzuzeigenden Richtung wahlweise aktiviert. Für das Abbiegen nach rechts wird beispielsweise das linke Vibrationselement aktiviert.

Der Nachteil dieser Vorrichtungen besteht darin, dass diese nicht geeignet sind Richtungsinformationen auf einfache Weise an den Fahrer zu übermitteln. Zudem kann das Signal, mittels dessen Informationen übertragen werden sollen, nur schwer von Vibrationen während des Betriebs des Fahrzeuges unterschieden werden.

Aufgabe der Erfindung ist es daher, eine Vorrichtung zu schaffen, mit der einem Fahrer Informationen übermittelt werden können, ohne dass ein Risiko für die Sicherheit geschaffen wird.

Der Erfindung liegt die Erkenntnis zugrunde, dass diese Aufgabe ideal gelöst werden kann, indem der Tastsinn des Fahrers verwendet wird und dem Fahrer auf diesem Weg ein Signal übermittelt wird, wobei das Signal durch geeignete Steuerung verschiedene Inhalte aufweisen kann.

Die Aufgabe wird daher erfindungsgemäß durch ein Informationssystem für ein Fahrzeug gelöst, wobei das Informationssystem ein Lenkrad umfasst, das mindestens eine zumindest teilweise in oder an zumindest einem Teil des Lenkradkranzes angeordnete Vibrationsvorrichtung mit mindestens zwei vibrationsfähigen Teilen aufweist, die zur Ausgabe von Informationen von einem Fahrerassistenzsystem an den Fahrer des Fahrzeuges ein Vibrationssignal erzeugen kann. Das Informationssystem zeichnet sich dadurch aus, dass die Informationen Richtungsinformationen darstellen und das Vibrationssignal ein sich zumindest über einen Teil des Umfangs des Lenkrads bewegendes Vibrationssignal darstellt.

Mit dem erfindungsgemäß verwendeten Lenkrad kann daher, neben der Möglichkeit einen Fahrer durch das Auftreten einer Vibration, auf eine Gefahrensituation hinzuweisen, dem Fahrer eine zusätzliche Information durch die sich über den Lenkradkranz bewegende Vibration übermittelt werden. Diese zusätzliche Information ist eine Richtungsinformation, die einen Fahrer beispielsweise zum Steuern des Fahrzeugs in die Richtung, in die sich die Vibration an dem Lenkradkranz bewegt, veranlassen soll. Diese Informationen können mit dem erfindungsgemäß verwendeten Lenkrad dem Fahrer eines Fahrzeugs über den haptischen Kanal zugänglich gemacht werden. Daher wird der Fahrer nicht in seiner Konzentration bezüglich der visuellen und akustischen Wahrnehmung des Verkehrsgeschehens beeinträchtigt.

Vorzugsweise weist die Vibrationsvorrichtung eine Steuereinheit auf. Diese Steuereinheit kann zum einen dem Ansteuern der Vibrationsvorrichtung und zum anderen dem Empfang und gegebenenfalls der Verarbeitung von Signalen dienen, die mittels der Vibrationsvorrichtung an den Fahrer übermittelt werden sollen.

Die Vibrationsvorrichtung umfasst mehrere Vibratoren. Diese können über den Umfang des Lenkradkranzes verteilt angeordnet in oder an dem Lenkrad- vorgesehen sein. Durch das Vorsehen einzelner Vibratoren kann der Anfangs- und Endpunkt der durch die Vorrichtung angestrebten umlaufenden Vibration beliebig gewählt werden und auch die Geschwindigkeit mit der das Vibrationssignal entlang dem Lenkradkranz umläuft kann gezielt eingestellt werden. Schließlich kann auch die Richtung des umlaufenden Vibrationssignals geändert werden.

Solche einzelnen Vibratoren der Vibrationsvorrichtung sind vorzugsweise durch die Steuereinheit separat ansteuerbar. Es ist aber auch möglich, die einzelnen Vibratoren elektrisch miteinander zu verbinden. Dadurch kann beispielsweise ein Vibrator, der neben einem anderen angeordnet ist, durch den erstgenannten aktiviert werden. Es kann vorgesehen sein, daß immer nur ein Vibrator ist. D.h., daß nach der Aktivierung eines weiteren Vibrators der zuvor aktivierte deaktiviert wird. Alternativ kann vorgesehen sein, daß eine bestimmte Anzahl von Vibratoren aktiviert wird. Beim Umlaufen der Vibration wird dann an einem Ende der aktivierten Vibratoren ein Vibrator deaktiviert, während am anderen Ende ein zuvor nicht aktivierter Vibrator aktiviert wird.

Die Anzahl der aktivierten Vibratoren kann ebenfalls zur Mitteilung einer Information an den Fahrer verwendet werden. Beispielsweise kann die Anzahl der aktivierten Vibratoren mit der Priorität der mitzuteilenden Information korreliert sein. Hierbei kann eine hohe Anzahl aktivierter Vibratoren einem schnellen Handlungsbedarf des Fahrers entsprechen, eine geringe Anzahl aktivierter Vibratoren dagegen ein Handlungserfordernis des Fahrers ankündigen, für das noch geraume Zeit zur Verfügung steht.

Als vibrationsfähige Teile können beispielsweise Unwuchtmotoren oder Piezoelemente dienen.

Vorzugsweise ist die Vibrationsvorrichtung mit einem Fahrerassistenzsystem zum Empfang von Informationssignalen verbunden. Als Fahrerassistenzsysteme werden im Sinne dieser Erfindung Systeme bezeichnet, die eine Wamfunktion und/oder eine Funktion zur Ermittlung von Korrekturvorschlägen ausführen.

Gemäß einem weiteren Aspekt der Erfindung wird die der Erfindung zugrundeliegende Aufgabe durch ein Informationssystem für ein Fahrzeug gelöst, das mindestens eine zumindest teilweise in oder an zumindest einem Teil des Lenkradkranzes angeordnete Vibrationsvorrichtung aufweist, die zur Ausgabe von Informationen ein sich zumindest über einen Teil des Umfangs des Lenkrads bewegendes Vibrationssignal erzeugen kann. Das Informationssystem kann weitere Komponenten, wie beispielsweise ein Fahrerassistenzsystem und eine Verarbeitungseinheit für Informationssignale, umfassen.

Schließlich betrifft die Erfindung ein Verfahren zur Ausgabe von Informationen über ein Lenkrad eines Fahrzeugs gemäß Anspruch 8. Vorzugsweise werden in Reaktion auf den Empfang eines Informationssignals über den Umfang des Lenkradkranzes verteilt angeordnete vibrationsfähige Teile der Vibrationsvorrichtung in einer zeitlichen Folge nacheinander aktiviert. Dadurch, dass einzelne vibrationsfähige Teile der Vibrationsvorrichtung zeitlich versetzt zueinander nacheinander aktiviert werden können, kann bei geeigneter Wahl der aktivierten Teile ein in eine gewisse Richtung an dem Lenkradkranz entlanglaufendes Vibrationssignal erzeugt werden.

Die Erfindung wird im Folgenden anhand der beiliegenden Zeichnungen, die sich auf eine mögliche Ausführungsform der Erfindung beziehen, beschrieben. Es zeigen:
- Figur 1:: eine schematische Darstellung einer Ausführungsform eines erfindungsgemäß verwendeten Lenkrads; und
- Figur 2:: eine schematische Block-Darstellung einer Ausführungsform des erfindungsgemäßen Informationssystems.

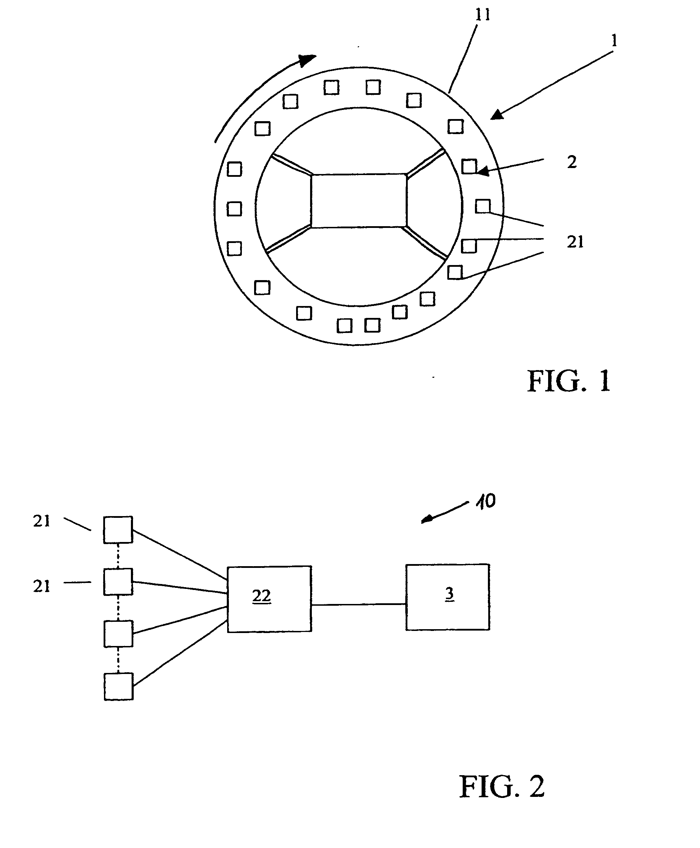

In Figur 1 wird eine mögliche Ausführungsform des erfindungsgemäß verwendeten Lenkrads 1 gezeigt. In der dargestellten Ausführungsform weist das Lenkrad 1 einen Lenkradkranz 11 auf. In diesem Lenkradkranz 11 ist ein Teil einer Vibrationsvorrichtung 2 angeordnet. Dieser Teil sind in der dargestellten Ausführungsform einzelne über den Umfang verteilte Vibratoren 21. Die Vibratoren 21 können beispielsweise in der Mitte des Querschnitts des Lenkradkranzes oder an der Unterseite des Lenkradkranzes angeordnet sein. Gemäß der Erfindung können die Vibratoren 21 beispielsweise in einer Richtung, die in Figur 1 durch den Pfeil angedeutet ist, nacheinander aktiviert werden und dadurch kann ein umlaufendes Vibrationssignal erzeugt werden.

In Figur 2 ist eine mögliche Ausführungsform des erfindungsgemäßen Informationssystems 10 gezeigt. Über ein Fahrerassistenzsystem 3 kann ein Informationssignal an die Steuerungseinheit 22 der Vibrationsvorrichtung 1 geleitet werden. Diese kann dieses Signal bearbeiten und in eine Anweisung zur Aktivierung der mit der Steuerungseinheit 22 verbunden Vibratoren 21 umsetzen. Die Aktivierung der einzelnen Vibratoren 21 erfolgt zeitlich versetzt. Wird beispielsweise der in der Figur 2 oben dargestellte Vibrator 21 als erster aktiviert, so wird im Anschluss daran und vorzugsweise, nachdem der erste Vibrator wieder deaktiviert wurde, der neben dem ersten Vibrator 21 angeordnete (in Figur 2 unterhalb des ersten Vibrators dargestellte) Vibrator 21 aktiviert. Dieser Vorgang des Aktivierens von Vibratoren kann solange fortgesetzt werden, bis eine vorgegebene Anzahl von Vibratoren nacheinander aktiviert wurde, oder bis eine vorbestimmte Zeitspanne vergangen ist.

Vorzugsweise wird durch die Aktivierung ein über den gesamten Umfang des Lenkrads umlaufendes Vibrationssignal erzeugt.

Werden Vibratoren, die, wie in Figur 1 dargestellt, angeordnet sind, zeitlich nacheinander aktiviert, so kann dem Fahrer dadurch beispielsweise die Information übermittelt werden, in welche Richtung er das Fahrzeug zur Vermeidung einer Gefahrensituation lenken sollte.

Als Fahrerassistenzsystem 3 kann beispielsweise ein Lane Departure Warning System verwendet werden, das dem Fahrer, falls er zu nahe an den Straßenrand gerät, über das erfindungsgemäße Informationssystem die Richtung anzeigen kann, in die er das Fahrzeug steuern muss, um eine Gefahrensituation zu vermeiden. In gleicher Weise kann das Informationssystem fungieren, wenn das Fahrerassistenzsystem 3 ein Heading Control System zur Unterstützung der Spurhaltung oder ein System für Nachtsicht mit Bildverarbeitung, bei dem das Vorfeld des Fahrzeugs erfasst und ausgewertet wird, darstellt. Wird als Fahrerassistenzsystem ein Totwinkelerkennungssystem eingesetzt, das den Fahrer auf Hindernisse aufmerksam macht, die im toten Winkel seines Sichtfeldes liegen, so kann das erfindungsgemäße Informationssystem durch die Vibrationsvorrichtung die Position anzeigen. Beispielsweise kann ein im Uhrzeigersinn umlaufendes Vibrationssignal auf ein Fahrzeug hinweisen, das sich im linken Totwinkel des Fahrzeugs befindet und ein gegen den Uhrzeigersinn umlaufendes Signal auf ein Fahrzeug im rechten Totwinkel, oder jeweils umgekehrt.

Die Erfindung ist nicht auf die in den Figuren dargestellten Ausführungsformen beschränkt. Vorzugsweise erstreckt sich der in dem Lenkradkranz vorgesehene Teil der Vibrationsvorrichtung gleichmäßig über den gesamten Umfang des Lenkradkranzes. Es ist aber auch möglich, die vibrationsfähigen Teile der Vibrationsvorrichtung nur in gewissen Bereichen des Lenkradkranzes vorzusehen. Hierbei sollte aber sichergestellt werden, dass zumindest zwei vibrationsfähige Teile in einem Bereich vorgesehen sind, der beim Umfassen des Lenkrads von der Handfläche bedeckt wird, um ein über einen Teil des Umfangs des Lenkrads umlaufendes Vibrationssignal erzeugen zu können und sicherstellen zu können, dass dieses Vibrationssignal vom Fahrer beispielsweise als Richtungsinformationen verstanden werden kann. Weiterhin kann die Steuereinheit der Vibrationsvorrichtung auch einen Teil des Fahrerassistenzsystems darstellen.

Wie sich aus dieser Beschreibung ergibt, ist es durch die Erfindung möglich, das Lenkrad und insbesondere den Lenkradkranz als Mensch-Maschine-Schnittstelle (HMI) zur Unterstützung des Fahrers eines Fahrzeugs bei der Fahrzeugführung zu nutzen. Insbesondere können durch die Erfindung Richtungsinformationen über das Lenkrad ausgegeben werden. In diesem Fall wird eine intuitive korrekte Reaktion des Fahrers bewirkt werden, die nicht gelernt werden muss.

Die bezüglich des Informationssystems beschriebenen Vorteile und Ausführungsformen gelten für das erfindungsgemäße Verfahren entsprechend.

## Patentansprüche

1. Informationssystem (10) für ein Fahrzeug, wobei das Informationssystem ein Lenkrad umfasst, das mindestens eine zumindest teilweise in oder an zumindest einem Teil des Lenkradkranzes (11) angeordnete Vibrationsvorrichtung (2) mit mindestens zwei vibrationsfähigen Teilen (21) aufweist, die zur Ausgabe von Informationen von einem Fahrerassistenzsystem an den Fahrer des Fahrzeuges ein Vibrationssignal erzeugen kann, wobei die Informationen Richtungsinformationen darstellen, **dadurch gekennzeichnet, dass** das Vibrationssignal ein sich zumindest über einen Teil des Umfangs des Lenkrads (1) bewegendes Vibrationssignal darstellt.

2. Informationssystem nach Anspruch 1, **dadurch gekennzeichnet, dass** die Vibrationsvorrichtung (2) eine Steuereinheit (22) aufweist.

3. Informationssystem gemäß Anspruch 2, **dadurch gekennzeichnet, dass** die einzelnen vibrationsfähigen Teile (21) durch die Steuereinheit (22) separat angesteuert werden können.

4. Informationssystem gemäß einem der Ansprüche 1 bis 3, **dadurch gekennzeichnet, dass** die einzelnen vibrationsfähigen Teile (21) elektrisch miteinander verbunden sind.

5. Informationssystem gemäß einem der Ansprüche 1 bis 4, **dadurch gekennzeichnet, dass** die Vibrationsvorrichtung (2) mindestens einen Unwuchtmotor umfasst.

6. Informationssystem gemäß einem der Ansprüche 1 bis 5, **dadurch gekennzeichnet, dass** die Vibrationsvorrichtung (2) mindestens ein Piezoelement umfasst.

7. Informationssystem gemäß einem der Ansprüche 1 bis 6, **dadurch gekennzeichnet, dass** die Vibrationsvorrichtung (2) mit einem Fahrerassistenzsystem (3) zum Empfang von Informationssignalen verbunden ist.

8. Verfahren zur Ausgabe von Informationen von einem Fahrerassistenzsystem an den Fahrer eines Fahrzeugs über das Lenkrad (1) des Fahrzeugs, wobei das Lenkrad (1) mindestens eine zumindest teilweise in oder an zumindest einem Teil des Lenkradkranzes (11) angeordnete Vibrationsvorrichtung (2) aufweist, wobei die Informationen Richtungsinformationen darstellen und wobei das Verfahren zumindest umfasst: das Empfangen eines Informationssignals vom Fahrerassistenzsystem an der Vibrationsvorrichtung (2) und als Reaktion auf das empfangene Informationssignal, Aktivieren zumindest eines vibrationsfähigen Teils (21) der Vibrationsvorrichtung, **dadurch gekennzeichnet, dass** anschließend an das Aktivieren eines vibrationsfähigen Teils (21) zumindest ein weiteres vibrationsfähiges Teils (21) der Vibrationsvorrichtung (2) zur Erzeugung eines sich zumindest über einen Teil des Umfangs des Lenkradkranzes bewegendes Vibrationssignals aktiviert wird.

9. Verfahren nach Anspruch 8, **dadurch gekennzeichnet, dass** in Reaktion auf den Empfang eines Informationssignals über den Umfang des Lenkradkranzes (11) verteilt angeordnete vibrationsfähige Teile (21) der Vibrationsvorrichtung (2) in einer zeitlichen Folge nacheinander aktiviert werden.

## Claims

1. Information system (10) for a vehicle, where the information system includes a steering wheel which comprises at least one vibration device (2) arranged partially in or on at least a portion of the steering wheel circle (11) with at least two vibratory parts (21) which can produce a vibration signal for issuing information from a driver assistance system to the driver of the vehicle, and the information represents directional information, **characterised in that** the vibration signal is a vibration signal which moves at least over part of the circumference of the steering wheel (1).

2. Information system according to Claim 1, **characterised in that** the vibration device (2) comprises a control unit (22).

3. Information system according to Claim 2, **characterised in that** the individual vibratory parts (21) can be separately controlled by the control unit (22).

4. Information system according to one of Claims 1 to 3, **characterised in that** the individual vibratory parts (21) are electrically connected.

5. Information system according to one of Claims 1 to 4, **characterised in that** the vibration device (2) includes at least one unbalance motor.

6. Information system according to one of Claims 1 to 5, **characterised in that** the vibration device (2) includes at least one piezo element.

7. Information system according to one of Claims 1 to 6, **characterised in that** the vibration device (2) is connected to a driver assistance system (3) for receiving information signals.

8. Method for issuing information from a driver assistance system to the driver of a vehicle via the steering wheel (1) of the vehicle, and the steering wheel (1) comprises at least one vibratory device (2) arranged at least partially in or on at least one part of the steering wheel circle (11), and the information represents directional information and the method covers at least: receiving an information signal from the driver assistance system at the vibration device (2), and as reaction to the received information signal activation of at least one vibratory part (21) of the vibration device, **characterised in that** following activation of a vibratory part (21) at least one additional vibratory part (21) of the vibration device (2) is activated for generating a vibration signal which moves at least over a portion of the circumference of the steering wheel circle.

9. Method according to Claim 8, **characterised in that** as a reaction to having received an information signal over the circumference of the steering wheel circle (11), spaced vibratory parts (21) of the vibration device (2) are activated in a chronological order.

## Revendications

1. Système de sortie d'information (10) pour un véhicule, le système de sortie d'information comprenant un volant de direction, présentant au moins un dispositif générateur de vibrations (2), disposé au moins partiellement dans ou sur au moins une partie de la jante de volant de direction (11), avec au moins deux parties (21) susceptibles d'entrer en vibration, pouvant générer un signal de vibration pour émettre des informations, venant d'un système d'assistance au conducteur et destinées au conducteur du véhicule, où les informations constituent des informations directionnelles, **caractérisé en ce que** le signal de vibration constitue un signal de vibration se déplaçant au moins sur une partie de la périphérie du volant de direction (1).

2. Système de sortie d'information selon la revendication 1, **caractérisé en ce que** dispositif générateur de vibrations (2) présente une unité de commande (22).

3. Système de sortie d'information selon la revendication 2, **caractérisé en ce que** les différentes parties (21) susceptibles d'entrer en vibration peuvent être commandées séparément par l'unité de commande (22).

4. Système de sortie d'information l'une des revendications 1 à 3, **caractérisé en ce que** les différentes parties (21) susceptibles d'entrer en vibration sont reliées ensemble de façon électrique.

5. Système de sortie d'information selon l'une des revendications 1 à 4, **caractérisé en ce que** le dispositif générateur de vibrations (2) comprend au moins un moteur à balourd.

6. Système de sortie d'information selon l'une des revendications 1 à 5, **caractérisé en ce que** le dispositif générateur de vibrations (2) comprend au moins un piézo-élément.

7. Système de sortie d'information selon l'une des revendications 1 à 6, **caractérisé en ce que** le dispositif générateur de vibrations (2) est relié à un système d'assistance au conducteur (3) pour recevoir des signaux d'information.

8. Procédé de sortie d'information émanant d'un système d'assistance au conducteur, destiné au conducteur d'un véhicule, par l'intermédiaire du volant de direction (1), le volant de direction (1) présentant au moins un dispositif générateur de vibrations (2) disposé au moins partiellement dans ou sur au moins une partie de la jante de volant de direction (11), les informations constituant des informations directionnelles et le procédé comprenant au moins : la réception d'un signal d'information provenant d'un système d'assistance au conducteur, sur le dispositif générateur de vibrations (2) et, en réaction à la réception du signal d'information, l'activation d'au moins une partie (21), susceptible d'entrer en vibration, du dispositif générateur de vibrations, **caractérisé en ce que**, à la suite de l'activation d'une partie (21) susceptible d'entrer en vibration, au moins une autre partie (21), susceptible d'entrer en vibration, du dispositif générateur de vibrations (2) est activée pour produire un signal de vibration se déplaçant au moins sur une partie de la périphérie de la jante de volant de direction.

9. Procédé selon la revendication 8, **caractérisé en ce qu'**en réaction à la réception d'un signal d'information, des parties (21) susceptibles d'entrer en vibration, réparties sur la périphérie de la jante de volant de direction (11), du dispositif générateur de vibrations (2), sont activées, les uns après les autres en une succession temporelle.
